# EUROPÄISCHE PATENTSCHRIFT

(11) **EP 3 486 014 B1**
(45) Veröffentlichungstag und Bekanntmachung des Hinweises auf die Patenterteilung: **30.10.2019**
(21) Anmeldenummer: 17020534.8
(22) Anmeldetag: 15.11.2017
(51) Int. Cl.: B23D 45/04, B27B 5/29, B23D 47/02

(54) **GEHRUNGSSÄGE UND WERKSTÜCKAUFLAGE HIERFÜR**
BEVEL SAW AND WORKPIECE SUPPORT FOR SAME
SCIE À ONGLET ET PORTE-PIÈCE CORRESPONDANT

(43) Veröffentlichungstag der Anmeldung: 22.05.2019
(73) Patentinhaber: Scheppach Fabrikation von Holzbearbeitungsmaschinen GmbH, 89335 Ichenhausen (DE)
(72) Erfinder: Bindhammer, Markus, 86316 Friedberg (DE)
(74) Vertreter: Munk, Ludwig

(56) Entgegenhaltungen:
- EP-A2- 1 570 963
- DE-A1- 3 907 807
- DE-A1-102007 011 167
- US-A1- 2004 154 448
- US-A1- 2014 265 095

## Beschreibung

Die Erfindung betrifft gemäß dem Oberbegriff des Anspruchs 1 eine Werkstückauflage für eine Gehrungssäge sowie gemäß dem Oberbegriff des Anspruchs 10 eine mit einer solchen Werkzeugauflage ausgestattete Gehrungssäge.

Eine solche Werkstückauflage ist aus DE102007011167A1 bekannt.

Gehrungssägen der gattungsgemäßen Art gibt es in einfacher Ausführung als Kappsägen, bei denen das Sägeblatt von oben aus einer Ruhestellung in seine Arbeitsstellung abgesenkt, meist heruntergeschwenkt werden kann, sowie in Weiterbildung als Kapp-Zug-Sägen, bei denen das Sägeblatt beziehungsweise die das Sägeblatt tragende Sägeeinheit auch noch in Transversalrichtung bewegt werden kann, um so Platz für breitere Werkstücke zu machen. Eine derartige Kapp-Zug-Gehrungssäge zeigt beispielsweise die US-Patentanmeldung US 2017/0136560 A1.

Die Gehrungssäge weist dabei einen auf einem Sägeständer drehbar aufgenommenen Drehteller auf, welcher wiederum einen Halter aufweist, an dem die Sägeeinheit mit dem Sägeblatt auf- und abschwenkbar, aber drehfest mit dem Drehteller verbunden ist. Über die Verdrehung des Drehtellers zum Sägeständer lässt sich dann der Gehrungswinkel einstellen, mit dem das Werkstück gesägt werden soll. Am Sägeständer fixierbare Anschläge können dabei vorgesehen sein, um das Werkstück in der gewünschten Lage, also auf Gehrung relativ zu dem mit dem Drehteller ausgeschwenkten Sägeblatt zu bringen. Um auch relativ breite Bretter ablängen zu können, ist die Sägeeinheit dabei nicht nur auf- und abschwenkbar, sondern auch längsverschieblich. Um die dabei notwendige Verlängerung des Eintauchschlitzes für das Sägeblatt bereitzustellen, ist der Drehteller mit einem radial auskragenden Auslegerarm versehen, in den der Eintauchschlitz hineinläuft. Zudem kann der Ausleger als Handgriff zum Verdrehen des Drehtellers gegenüber dem Sägeständer dienen.

In der deutschen Patentanmeldung DE 10 2007 011167 A1 ist ebenfalls eine Gehrungssäge dieser Art gezeigt, welche jedoch einen klappbar oder abnehmbar an dem Drehteller angebrachten Ausleger aufweist. Dadurch lässt sich das Transportvolumen der Gehrungssäge verkleinern. Zur Anlenkung des Auslegers an dem Drehtisch sind dabei ein Achsstift und ein Verbindungselement vorgesehen.

Hiervon ausgehend ist es Aufgabe der vorliegenden Erfindung, eine Werkzeugauflage für eine Gehrungssäge und eine mit einer solchen Werkzeugauflage ausgestattete Gehrungssäge zu schaffen, die ein verkleinertes Transportvolumen bei einfachem Aufbau erlaubt.

Diese Aufgabe wird hinsichtlich der Werkstückauflage mit den Merkmalen des Anspruchs 1 gelöst, hinsichtlich der Gehrungssäge mit den Merkmalen des Anspruchs 10.

Eine gattungsgemäße Werkstückauflage für eine Gehrungssäge ist zur drehbaren Anbringung an einem Sägeständer und zur mitdrehenden Befestigung einer Sägeeinheit mit einem aus einer Position oberhalb der Werkstückauflage absenkbaren Sägeblatt geeignet. Das Sägeblatt kann dabei bei einer Kapp-Zug-Gehrungssäge in Transversalrichtung bewegbar beziehungsweise verfahrbar aufgenommen sein, bei einer reinen Kapp-Gehrungssäge dagegen nicht bewegbar beziehungsweise verfahrbar. Die Werkstückauflage weist dabei weiterhin gattungsgemäß einen insbesondere kreisscheibenförmigen Drehteller auf, der von einem als Durchlass für das in Arbeitsstellung abgesenkte Sägeblatt dienenden Sägeblattschlitz durchdrungen ist und an einer Seite einen Halter zur Befestigung der Sägeeinrichtung mit dem Sägeblatt aufweist. Dabei ist ferner ein Radialausleger vorgesehen, der den Drehteller und den Sägeblattschlitz auf einer der in Schlitzlängsrichtung dem Halter gegenüberliegenden Seite nach radial außen hin verlängert.

Weiterhin ist eine Radialauslegeranbindung vorgesehen, an der der Radialausleger abnehmbar und mitdrehend an dem Drehteller angebracht ist. Alternativ dazu kann auch ein einstückig mit dem Drehteller ausgebildeter, radial innerer Radialauslegerinnenabschnitt vorgesehen sein, an dem ein radial äußerer Radialauslegeraußenabschnitt des Radialauslegers abnehmbar und mitdrehend angebracht ist.

Erfindungsgemäß ist dabei die Radialauslegeranbindung als Schwalbenschwanzverbindung des Radialauslegers mit dem Drehteller beziehungsweise des Radialauslegeraußenabschnitts mit dem Radialauslegerinnenabschnitt ausgebildet. Eine Schwalbenschwanzverbindung ist in hohem Maße in Quer- und Längsrichtung formschlüssig. Die Radialauslegeranbindung weist dabei zu beiden Seiten des Sägeblattschlitzes jeweils einen als Schwalbenschwanzvorsprung ausgeformten Einsteckzapfen und eine diesem Einsteckzapfen zugeordnete, als Schwalbenschwanzausnahme ausgeformte Steckaufnahme auf. Dadurch ergibt sich bei entsprechend guter Passung zumindest in Längsrichtung, Querrichtung und in alle möglichen Drehmomentrichtungen eine sichere Befestigung. Die Einsteckzapfen stehen dabei vom Radialausleger beziehungsweise vom Radialauslegerabschnitt nach radial innen vor, wobei die Werkstückauflage beziehungsweise der Radialauslegerinnenabschnitt dann eine dem jeweiligen Einsteckzapfen zugeordnete Steckaufnahme aufweisen kann.

Weiterhin erfindungsgemäß ist eine Verriegelungseinrichtung vorgesehen, um die Radialauslegeranbindung bei an dem Drehteller angebrachtem Radialausleger beziehungsweise an dem Radialauslegerinnenabschnitt angebrachtem Radialauslegeraußenabschnitt lösbar zu verriegeln. Die Verriegelungseinrichtung weist einen Querriegel auf, der in einer quer zum Sägeblattschlitz verlaufenden Richtung in eine Riegelaufnahme eingeschoben beziehungsweise einschiebbar ist. Da der Sägeblattschlitz zum Sägen frei bleiben muss erstreckt sich die Riegelaufnahme und der eingeschobene Querriegel in Querrichtung zum Sägeblattschlitz zumindest durch eine Seitenwand hindurch bis zu einem der Einsteckzapfen oder lediglich noch durch diesen Einsteckzapfen hindurch, der Sägeblattschlitz zum Sägen frei bleibt. Es wäre jedoch denkbar, einen Schlitzeinsatz vorzusehen, der eine Inbetriebnahme der Säge im Transportzustand ohne angebauten Radialausleger verhindert, indem er den Sägeblattschlitz versperrt. Der Schlitzeinsatz muss dann vor dem Anbau des Auslegers entnommen werden.

Weiterhin ist vorteilhaft im Sinne einer einfachen Bedienung eine Betätigungseinrichtung für die Verriegelungseinrichtung vorgesehen, beispielsweise ein am Querriegel angebrachter Handknauf, der ein einfaches Einschieben und Herausziehen des Riegels erlaubt.

Die Verriegelungseinrichtung kann dann zum einen als zusätzliche Sicherheit gegen eine unerwünschte Relativbewegung des Radialauslegers beziehungsweise des Radialauslegeraußenabschnitts gegenüber dem Drehteller beziehungsweise dem Radialauslegerinnenabschnitt dienen und zum anderen als Höhenfixierung des Radialauslegers an dem Drehteller beziehungsweise des Radialauslegeraußenabschnitts an dem Radialauslegerinnenabschnitt.

Mit der erfindungsgemäßen Ausbildung der Radialauslegeranbindung als Schwalbenschwanzverbindung kann die Verbindung von Radialausleger und Drehteller beziehungsweise Radialauslegerinnenabschnitt und Radialauslegeraußenabschnitt zwar nicht im Stumpfstoß hergestellt werden, aber von oben oder von unten her. Zudem wäre es denkbar, die Schwalbenschwanzaufnahme beziehungsweise -aufnahmen unterseitig geschlossen auszuformen, so dass der von oben einzusteckende Schwalbenschwanzvorsprung dann auch unterseitig aufliegen kann. In Höhenrichtung kann dann eine Gleitauflage auf dem Sägeständer als Abstützung dienen.

Bevorzugt ist es jedoch, wenn die Radialauslegeranbindung so ausgebildet ist, dass der Radialausleger an der Werkstückauflage oder der Radialauslegeraußenabschnitt an dem Radialauslegerinnenabschnitt von unten her anbringbar ist. Die Schwalbenschwanzaufnahmen müssen dann entsprechend nach unten hin offen sein und sind vorteilhaft durchgängig und somit auch nach oben hin offen.

Dann kann zusätzlich ein zwischen den beiden Einsteckzapfen zur Werkstückauflage hin vorstehender Vorsprung am Radialausleger bzw. am Radialauslegeraußenabschnitt vorgesehen sein, der bei an der Werkstückaufnahme bzw. dem Radialauslegerinnenabschnitt angebrachtem Radialausleger bzw. Radialauslegeraußenabschnitt die Werkstückaufnahme bzw. den Radialauslegerinnenabschnitt untergreift.

Die Radialauslegeranbindung kann als Steckverbindung des Radialauslegers mit dem Drehteller ausgebildet sein. Ist lediglich der radial außen angeordnete Radialauslegeraußenabschnitt abnehmbar ausgebildet, so befindet sich die als Steckverbindung ausgebildete Radialauslegeranbindung an der Schnittstelle zwischen dem Radialauslegeraußenabschnitt und dem Radialauslegerinnenabschnitt. Vorteilhaft ist die Steckverbindung dabei formschlüssig ausgeführt, also etwa im Passsitz. Auch eine Rastverbindung wäre denkbar.

Die erfindungsgemäße Gehrungssäge weist einen Sägeständer und eine daran drehbar aufgenommene Werkstückauflage der erfindungsgemäßen Art auf, wobei an der Werkstückauflage eine Sägeeinheit mitdrehend befestigt ist, welche ein aus einer Position oberhalb der Werkstückauflage in eine Arbeitsstellung absenkbares, transversal verfahrbares oder nicht verfahrbares Sägeblatt aufweist.

Mit transversal verfahrbar ist dabei gemeint, dass das Sägeblatt beziehungsweise die das Sägeblatt haltende Sägeeinheit so an dem Drehteller der Werkstückauflage angebracht ist, dass das Sägeblatt eine Bewegung mit zumindest einer Richtungskomponente längs des Sägeblattschlitzes ausführen kann, nicht notwendigerweise eine reine Transversalbewegung, zusätzlich zur Schwenkbewegung.

Die Abnehmbarkeit des Radialauslegers oder zumindest dessen äußeren Radialauslegeraußenabschnitts bewirkt zum einen ein noch kleineres Packmaß als ein abschwenkbarer Radialausleger. Zum anderen ist die Anbindung des Radialauslegers an den Drehteller beziehungsweise des Radialauslegeraußenabschnitts an den Radialauslegerinnenabschnitt konstruktiv einfach zu bewerkstelligen, ohne oder zumindest mit wenigen zusätzlichen Bauteilen und somit kostengünstig zu realisieren, bei einfacher Handhabung.

Weiterhin vorteilhaft ist es, wenn unterseitig an dem abnehmbaren Radialausleger beziehungsweise an dem abnehmbaren Radialauslegeraußenabschnitt ein Festsetzhebel angebracht ist, der Teil einer Festsetzeinrichtung zum Festsetzen der Werkstückauflage an dem Sägeständer ist. Bei Gehrungssägen der gattungsgemäßen Art sind Festsetzeinrichtungen nötig, um die Werkstückauflage in einer Arbeitsstellung mit dem gewünschten Gehrungswinkel gegenüber dem Sägeständer an dem Sägeständer zu fixieren. Diese Festsetzeinrichtungen weisen meist auf der dem Benutzer zugewandten Seite entsprechende Betätigungs- beziehungsweise Festsetzhebel auf. Ist der Festsetzhebel am abnehmbaren Radialausleger beziehungsweise am abnehmbaren Radialauslegeraußenabschnitt unterseitig vorgesehen, so bedarf es lediglich eines Handgriffs, um zum einen die Festsetzeinrichtung zu lösen und zum anderen die Werkstückauflage gegenüber dem Sägeständer in eine gewünschte Gehrungsstellung zu verdrehen.

Weiterhin vorteilhaft ist es, wenn der Sägeblattschlitz von einer austauschbaren Tischeinlage eingefasst ist, so dass der im Sägebetrieb hohen Belastungen ausgesetzte Bereich um den Sägeblattschlitz herum erneuert werden kann. Die Tischeinlage ist dabei vorteilhaft aus einem leicht zerspanbaren Material wie beispielsweise Kunststoff, so dass ein Fluchtungsfehler des Sägeblatts mit dem Sägeblattschlitz nicht sofort zu einer schwerwiegenden Kollision führt. Da sich der Sägeblattschlitz entlang des Radialauslegers und in den Drehteller hinein erstreckt, ist es dabei besonders bevorzugt, wenn die Tischeinlage ein drehtellerseitiges Einlagenstück und ein radialauslegerseitiges Einlagenstück umfasst, wobei bei einer Teilung des Radialauslegers in einen am Drehteller einstückig angebrachten Radialauslegerinnenabschnitt und einen abnehmbaren Radialauslegeraußenabschnitt sich das drehtellerseitige Einlagenstück bis zur Radialauslegeranbindung erstreckt und das radialauslegerseitige Einlagenstück im Radialauslegeraußenabschnitt.

Nachfolgend wird anhand der beiliegenden Figuren eine vorteilhafte Ausführungsform der Erfindung näher erläutert. Es zeigen:

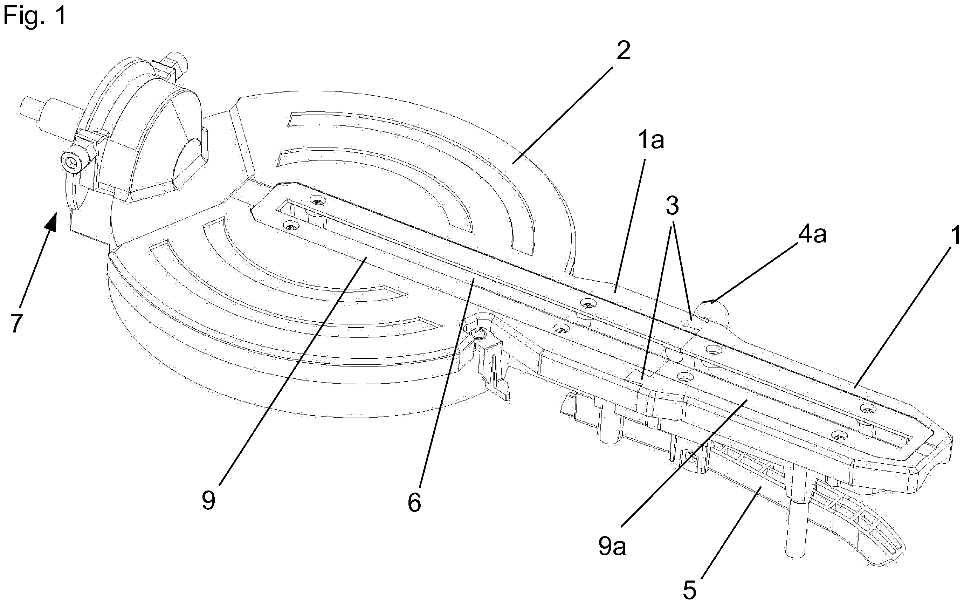

- Figur 1: eine perspektivische Ansicht einer Werkstückauflage gemäß einer Ausführungsform der Erfindung von schräg oben im zusammengebauten Zustand;
- Figur 2: eine perspektivische Ansicht der in Figur 1 gezeigten Werkstückauflage von schräg unten im zusammengebauten Zustand;
- Figur 3: eine der Figur 1 entsprechende Ansicht der in den Figuren 1 und 2 gezeigten Werkstückauflage, jedoch mit abgenommenem Radialauslegeraußenabschnitt; und
- Figur 4: eine der Figur 2 entsprechende Ansicht der in den Figuren 1 bis 3 gezeigten Werkstückauflage, jedoch mit abgenommenem Radialauslegeraußenabschnitt.

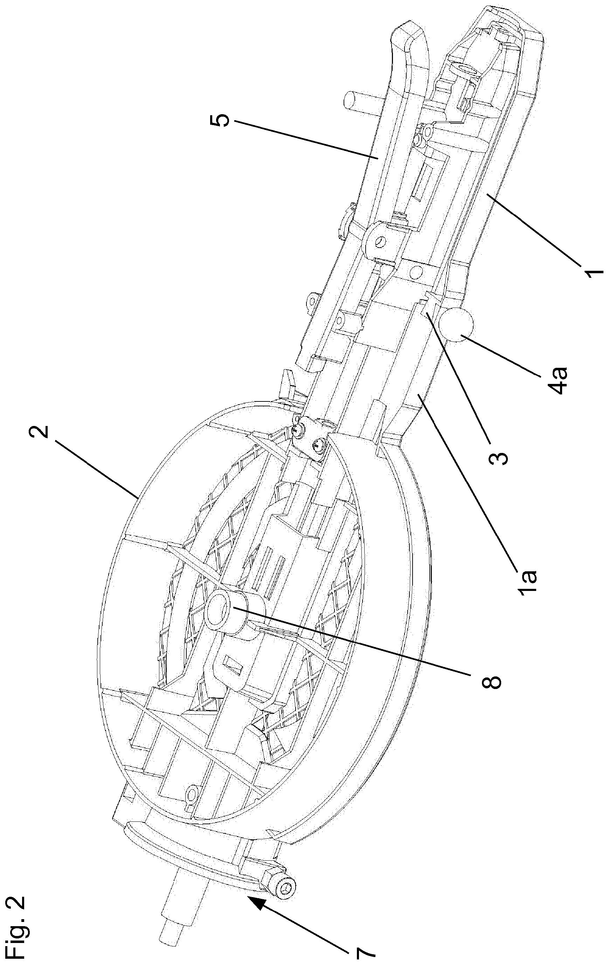

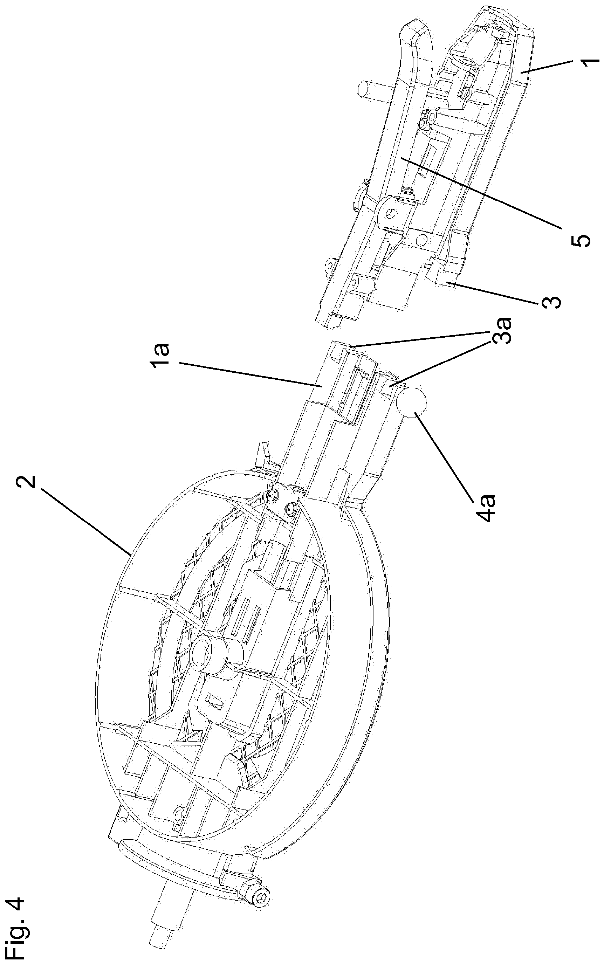

Die in den Figuren gezeigte Werkstückauflage weist einen mit 2 bezeichneten Drehteller auf, an dem einstückig ein in Radialrichtung abstehender Radialauslegerinnenabschnitt 1a angeformt ist, an dem wiederum ein sich im zusammengebauten Zustand der Werkstückauflage noch weiter nach radial außen erstreckender, radial äußerer Radialauslegeraußenabschnitt 1 angebracht ist. In den Figuren 2 und 4 sieht man dabei eine unterseitige Drehzapfenaufnahme 8 im Mittelpunkt des Drehtellers 2, an der dieser auf einen Drehzapfen eines Sägeständers einer Gehrungssäge aufgesetzt werden kann.

Entlang der Radialrichtung, in der sich der Radialausleger 1, 1a erstreckt, verläuft ein Sägeblattschlitz 6, der beim Sägen von einem von oben her abzusenkenden Sägeblatt der Säge durchdrungen werden kann. Auf der dem Radialausleger 1, 1a gegenüberliegenden Seite des Drehtellers 2 ist dabei ein Halter 7 vorgesehen, an dem die Sägeeinheit der mit der Werkzeugauflage auszustattenden Gehrungssäge drehfest, also bei Verdrehen des Drehtellers mitdrehend anbringbar ist. Auf die Art der Befestigung der Sägeeinheit an dem dafür vorgesehenen Halter 7 wird hier nicht näher eingegangen, weil dies auf fachnotorisch bekannte Weise gelöst werden kann, beispielsweise über einen an dem Halter 7 aufzusetzenden, nach oben ragenden Träger, welcher einen Schwenkkopf mit dem Sägeblatt und im Falle einer Kapp-Zug-Säge entsprechende Führungen aufweisen kann.

Der Sägeblattschlitz 6 ist dabei von einer Tischeinlage 9, 9a eingefasst, die aus einem leicht zerspanbaren Material wie Kunststoff besteht und zweiteilig ist. Der den Sägeblattschlitz 6 im Bereich des Drehtellers 2 und des Radialauslegerinnenabschnitts 1a einfassende, drehtellerseitige Einlagenteil beziehungsweise das drehtellerseitige Einlagenstück 9 ist dabei mit Schrauben und mit bündiger Oberfläche am Drehteller 2 und am Radialauslegerinnenabschnitt 1a angeschraubt, wohingegen das radialauslegerseitige Einlagenstück 9a, welches sich im Bereich des Radialauslegeraußenabschnitts 1 erstreckt, dort ebenfalls bündig mit Schrauben befestigt sein kann.

Die Anbindung des Radialauslegeraußenabschnitts 1 an das aus Drehteller 2, Halter 7 und Radialauslegerinnenabschnitt 1a bestehende Bauteil erfolgt dabei über eine als Schwalbenschwanzverbindung ausgebildete Radialauslegeranbindung 3, 3a. Mit 3 sind dabei zwei an der dem Radialauslegerinnenabschnitt 1a zugewandten Stirnseite des Radialauslegeraußenabschnitts 1 vorspringende schwalbenschwanzförmige Vorsprünge beziehungsweise Schwalbenschwanzvorsprünge bezeichnet, denen zwei entsprechende Schwalbenschwanzausnehmungen 3a an der nach radial außen weisenden Stirnseite des Radialauslegerinnenabschnitts 1a zugeordnet sind.

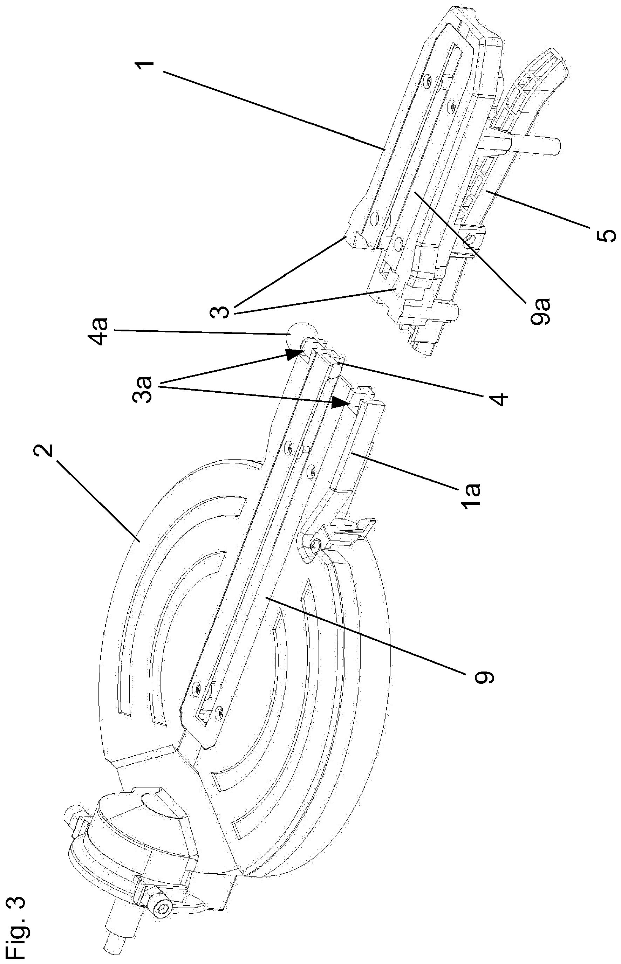

Um den an den Radialauslegerinnenabschnitt 1a an der Schwalbenschwanzverbindung 3, 3a angebrachten beziehungsweise eingesteckten Radialauslegeraußenabschnitt 1 dort mit fluchtender Auflagefläche festzusetzen, ist dabei eine zusätzliche Verriegelungseinrichtung 4a, 4 vorgesehen, die einen von der Seite her einschiebbaren Querriegel 4 mit einem daran angebrachten Handknauf 4a aufweist, wie am besten in der Figur 3 zu erkennen ist. Der Querriegel 4 durchdringt dabei die beiden eine der Schwalbenschwanzaufnahmen 3a seitlich einfassenden Wandbereiche am Radialauslegerinnenabschnitt 1a durch ein entsprechendes, dort vorgesehenes Passloch hindurch, ebenso wie den zugeordneten Schwalbenschwanzvorsprung 3 am Radialauslegeraußenabschnitt 1.

Die Werkstückauflage beziehungsweise die mit der Werkstückauflage versehene Gehrungssäge lässt sich somit in Verpackungseinheiten mit geringem Packmaß transportieren, wobei bei der Inbetriebnahme lediglich der Radialauslegeraußenabschnitt 1 am Radialauslegerinnenabschnitt 1a aufgesteckt und mit der Verriegelungseinrichtung 4, 4a verriegelt werden muss.

Ein zwischen den beiden Einsteckzapfen 3 zur Werkstückauflage hin vorstehender Passvorsprung am Radialauslegeraußenabschnitt 1 untergreift den Radialauslegerinnenabschnitt 1a und passt in eine entsprechende Aufnahme am Radialauslegerinnenabschnitt 1a. Unterseitig an dem abnehmbaren Radialauslegeraußenabschnitt 1 ist ein Festsetzhebel 5 angebracht, der Teil einer Festsetzeinrichtung zum Festsetzen der Werkstückauflage an dem Sägeständer ist. Der Festsetzhebel 5 steht zur Werkstückauflage hin über den Radialausleger bzw. den Radialauslegeraußenabschnitt über. Die Schwalbenschwanzaufnahmen 3a sind nach unten hin, aber auch nach oben hin offen. Der Radialauslegeraußenabschnitt 1 ist somit von unten her an dem Radialauslegerinnenabschnitt 1a anbringbar Abwandlungen und Modifikationen sind möglich, gemäß der Erfindung, wie in den Ansprüchen definiert.

## Patentansprüche

1. Werkstückauflage für Gehrungssäge, geeignet zur drehbaren Anbringung an einem Sägeständer und zur mitdrehenden Befestigung einer Sägeeinheit mit einem aus einer Position oberhalb der Werkstückauflage absenkbarem, transversal verschiebbaren oder nicht verschiebbaren Sägeblatt, mit einem kreisscheibenförmigen Drehteller (2), das von einem als Durchlass für das in Arbeitsstellung abgesenkte Sägeblatt dienenden Sägeblattschlitz (6) durchdrungen ist und an einer Seite einen Halter (7) zur Befestigung der Sägeeinrichtung aufweist, sowie mit einem Radialausleger (1, 1a), der das Drehteller (2) und den Sägeblattschlitz (6) auf einer der in Schlitzlängsrichtung dem Halter (7) gegenüberliegenden Seite nach radial außen hin verlängert, wobei eine Radialauslegeranbindung (3, 3a) vorgesehen ist, an der der Radialausleger abnehmbar und mitdrehend an der Werkstückauflage angebracht ist oder an der ein radial äußerer Radialauslegeraußenabschnitt (1) des Radialauslegers (1, 1a) abnehmbar und mitdrehend an einem einstückig mit dem Drehteller (2) ausgebildeten, radial inneren Radialauslegerinnenabschnitt (1a) des Radialauslegers (1, 1a) angebracht ist, wobei
eine Verriegelungseinrichtung (4, 4a) vorgesehen ist, um die Radialauslegeranbindung (3, 3a) lösbar zu verriegeln, welche Verriegelungseinrichtung (4, 4a) einen Querriegel (4) aufweist, der in einer quer zum Sägeblattschlitz (6) verlaufenden Richtung in eine Riegelaufnahme eingeschoben ist,
**dadurch gekennzeichnet, dass**
die Radialauslegeranbindung (3, 3a) als Schwalbenschwanzverbindung des Radialauslegers mit der Werkstückauflage oder des Radialauslegeraußenabschnitts (1) mit dem Radialauslegerinnenabschnitt (1a) ausgebildet ist, wobei
die Radialauslegeranbindung (3, 3a) zu beiden Seiten des Sägeblattschlitzes (6) jeweils einen vom Radialausleger bzw. vom Radialauslegeraußenabschnitt (1) nach radial innen vorstehenden, als Schwalbenschwanzvorsprung (3) ausgeformten Einsteckzapfen (3) und jeweils eine zugeordnete, als Schwalbenschwanzaufnahme (3a) ausgeformte Steckaufnahme (3a) an der Werkstückauflage bzw. dem Radialauslegerinnenabschnitt (1a) aufweist, und wobei
sich die Riegelaufnahme durch eine in Querrichtung zum Sägeblattschlitz (6) gelegene Seitenwand hindurch bis zu einem der beiden eingesteckten Einsteckzapfen (3) und durch den einen der beiden Einsteckzapfen (3) hindurch erstreckt, so dass der seitlich daneben angeordnete Sägeblattschlitz (6) frei bleibt.

2. Werkstückauflage nach Anspruch 1, **dadurch gekennzeichnet, dass** die Radialauslegeranbindung (3, 3a) als Steckverbindung des Radialauslegers mit der Werkstückauflage oder des Radialauslegeraußenabschnitts (1) mit dem Radialauslegerinnenabschnitt (1a) ausgebildet ist, wobei die Steckverbindung formschlüssig, also in etwa im Passsitz ausgebildet ist.

3. Werkstückauflage nach Anspruch 1, **dadurch gekennzeichnet, dass** die Radialauslegeranbindung (3, 3a) als Rastverbindung des Radialauslegers mit der Werkstückauflage oder des Radialauslegeraußenabschnitts (1) mit dem Radialauslegerinnenabschnitt (1a) ausgebildet ist.

4. Werkstückauflage nach einem der vorhergehenden Ansprüche, **dadurch gekennzeichnet, dass** die Radialauslegeranbindung (3, 3a) so ausgebildet ist, dass der Radialausleger an der Werkstückauflage oder der Radialauslegeraußenabschnitt (1) an dem Radialauslegerinnenabschnitt (1a) von unten her anbringbar ist.

5. Werkstückauflage nach Anspruch 4, **dadurch gekennzeichnet, dass** die Schwalbenschwanzaufnahmen (3a) nach oben und unten hin offen sind.

6. Werkstückauflage nach Anspruch 6, **dadurch gekennzeichnet, dass** die Verriegelungseinrichtung (4, 4a) zur Betätigung eine Betätigungseinrichtung umfasst, insbesondere eine als am Querriegel (4) angebrachter Handknauf (4a) ausgebildete Betätigungseinrichtung.

7. Werkstückauflage nach einem der vorhergehenden Ansprüche, **dadurch gekennzeichnet, dass** an dem abnehmbaren Radialausleger bzw. Radialauslegeraußenabschnitt (1) unterseitig ein Festsetzhebel (5) angebracht ist, der als Teil einer Festsetzeinrichtung zum Festsetzen der Werkstückauflage an dem Sägeständer dient.

8. Werkstückauflage nach einem der vorhergehenden Ansprüche, **dadurch gekennzeichnet, dass** der Radialausleger bzw. der Radialauslegeraußenabschnitt (1) einen zwischen seinen beiden Einsteckzapfen (3) zur Werkstückauflage hin vorstehenden Vorsprung aufweist, der bei an der Werkstückaufnahme bzw. dem Radialauslegerinnenabschnitt (1a) angebrachtem Radialausleger bzw. Radialauslegeraußenabschnitt (1) die Werkstückaufnahme bzw. den Radialauslegerinnenabschnitt (1a) untergreift.

9. Werkstückauflage nach einem der vorhergehenden Ansprüche, **dadurch gekennzeichnet, dass** der Sägeblattschlitz (6) von einer austauschbaren Tischeinlage (9, 9a) aus einem leicht zerspanbaren Material wie Kunststoff eingefasst ist, welche zumindest ein drehtellerseitiges Einlagenstück (9) und zumindest ein radialauslegerseitiges Einlagenstück (9a) umfasst.

10. Gehrungssäge mit einem Sägeständer und einer daran drehbar aufgenommenen Werkstückauflage, sowie einer an der Werkstückauflage mitdrehend befestigten Sägeeinheit, welche ein aus einer Position oberhalb der Werkstückauflage absenkbares, transversal verschiebbares oder nicht verschiebbares Sägeblatt aufweist, **dadurch gekennzeichnet, dass** die Werkstückauflage nach einem der vorhergehenden Ansprüche ausgebildet ist.

## Claims

1. Workpiece support for mitre saw, suitable for rotatably mounting it on a saw stand and for co-rotating fastening thereto a saw unit having a saw blade lowerable from a position above the workpiece support, displaceable or not displaceable transversely , the workpiece support comprising:
a circular disc-shaped turntable (2) being penetrated by a saw blade slot (6) serving as a passage for the saw blade lowered into the working position and having on one side a holder (7) for fastening the sawing unit, a radial arm (1, 1a) extending the rotary plate (2) and the saw blade slot (6) radially outwards on a side opposite the holder (7) in a longitudinal direction of the saw blade slot (6), wherein a radial arm connection (3, 3a) is provided, on which the radial arm (1, 1a) is attached detachably and co-rotatably to the workpiece support or on which a radially outer radial arm outer portion (1) of the radial arm (1, 1a) is detachably and co-rotatably attached to a radially inner radial arm inner portion (1a) of the radial arm (1, 1a) integrally formed with the rotary plate (2), wherein
a locking device (4, 4a) is provided in order to detachably lock the radial arm connection (3, 3a), which locking device (4, 4a) has a transverse bolt (4) to be pushed into a bolt receptacle in a direction transverse to the saw blade slot (6),
**characterized in that**
the radial arm connection (3, 3a) is formed as a dovetail connection of the radial arm with the workpiece support or of the radial arm outer portion (1) with the radial arm inner portion (1a), wherein
the radial arm connection (3, 3a) has on both sides of the saw blade slot (6) one insertion pin (3) projecting radially inwards from the radial arm or from the radial arm outer portion (1) and formed as a dovetail projection and an associated insertion receptacle (3a) formed as a dovetail receptacle on the workpiece support or the radial arm inner portion (1a) , and wherein
the bolt receptacle reaches through a side wall located in a direction transverse to the saw blade slot (6) as far as to one of the two inserted insertion pins (3) and through one of the inserted insertion pins (3), such that the saw blade slot (6) arranged laterally adjacent thereto remains free.

2. Workpiece support according to claim 1, **characterized in that** the radial arm connection (3, 3a) is formed as a plug-in connection of the radial arm with the workpiece support or of the radial arm outer portion (1) with the radial arm inner portion (1a), wherein the plug-in connection is formed in a form-fitting manner, e.g. in snug fit.

3. Workpiece support according to claim 1, **characterized in that** the radial arm connection (3, 3a) is formed as a snap-in connection of the radial arm with the workpiece support or of the radial arm outer portion (1) with the radial arm inner portion (1a).

4. Workpiece support according to one of the preceding claims, **characterized in that** the radial arm connection (3, 3a) is formed such that the radial arm can be attached to the workpiece support or the radial arm outer portion (1) can be attached to the radial arm inner portion (1a) from below.

5. Workpiece support according to claim 4, **characterized in that** the insertion receptacles (3a) are open at the top and at the bottom.

6. Workpiece support according to claim 5, **characterized in that** the locking device (4, 4a) for actuation comprises an actuating device, in particular an actuating device in the form of a hand knob (4a) mounted on the transverse bolt (4).

7. Workpiece support according to one of the preceding claims, **characterized in that** a fixing lever (5), which serves as part of a fixing device for fixing the workpiece support to the saw stand, is mounted on the underside of the removable radial arm or radial arm outer portion (1).

8. Workpiece support according to one of the preceding claims, **characterized in that** the radial arm or the radial arm outer portion (1) has a projection projecting between its two insertion pins (3) towards the workpiece support, which fitting projection, when the radial arm or the radial arm outer portion (1) is fitted to the workpiece support or the radial arm inner portion (1a), engages under the workpiece support or the radial arm inner portion (1a).

9. Workpiece support according to one of the preceding claims, **characterized in that** the saw blade slot (6) is surrounded by an exchangeable table insert (9, 9a) made of an easily machinable material such as plastic, which comprises at least one turntable side insert piece (9) and at least one radial arm side insert piece (9a).

10. Mitre saw with a saw stand and a workpiece support rotatably received thereon, as well as a saw unit co-rotatably fastened to the workpiece support, which saw unit has a saw blade being lowerable from a position above the workpiece support and being displaceable or not displaceable transversely, **characterized in that** the workpiece support is formed according to one of the preceding claims.

## Revendications

1. Porte-pièce pour scie à onglet, adapté pour le montage rotatif sur un support de scie et pour la fixation en rotation simultanée d'un ensemble de scie ayant une lame de scie qui est apte à être abaissée à partir d'une position située au-dessus du porte-pièce, est déplaçable de manière transversale ou n'est pas déplaçable, avec un plateau tournant (2) en forme de disque circulaire qui est traversé par une fente pour lame de scie (6) faisant office de passage pour la lame de scie se trouvant dans la position de travail et qui présente, sur un côté, un support (7) pour la fixation du dispositif de sciage, ainsi qu'avec un bras radial (1, 1a) qui rallonge le plateau tournant (2) et la fente pour lame de scie (6) radialement vers l'extérieur sur un côté opposé au support (7) dans la direction longitudinale de fente, dans lequel une attache de bras radial (3, 3a) est prévue sur laquelle le bras radial est monté de manière amovible et de manière à tourner simultanément sur le porte-pièce ou sur laquelle une portion extérieure de bras radial (1) radialement extérieure du bras radial (1, 1a) est montée de manière amovible et de manière à tourner simultanément sur une portion intérieure de bras radial (1a) radialement intérieure du bras radial (1, 1a), qui est réalisée d'un seul tenant avec ledit plateau tournant (2), dans lequel
un dispositif de verrouillage (4, 4a) est prévu pour verrouiller de manière amovible ladite attache de bras radial (3, 3a), lequel dispositif de verrouillage (4, 4a) présente un verrou transversal (4) qui est introduit, dans une direction transversale à la fente pour lame de scie (6), dans un logement de verrou,
**caractérisé par le fait que**
ladite attache de bras radial (3, 3a) est réalisée sous forme de liaison en queue d'aronde du bras radial avec le porte-pièce ou de la portion extérieure de bras radial (1) avec la portion intérieure de bras radial (1a), dans lequel
l'attache de bras radial (3, 3a) présente, de part et d'autre de la fente pour lame de scie (6), respectivement un tenon mâle (3) qui fait saillie radialement vers l'intérieur à partir du bras radial ou bien de la portion extérieure de bras radial (1) et est conçu en tant que projection en queue d'aronde (3), ainsi que respectivement un logement femelle (3a) associé sur le porte-pièce ou bien sur la portion intérieure de bras radial (1a), qui est conçu en tant que logement en queue d'aronde (3a), et dans lequel le logement de verrou s'étend à travers une paroi latérale située dans la direction transversale par rapport à la fente pour lame de scie (6) et jusqu'à l'un des deux tenons mâles (3) engagés ainsi qu'à travers l'un des deux tenons mâles (3) de sorte que la fente pour lame de scie (6) disposée latéralement à côté reste libre.

2. Porte-pièce selon la revendication 1, **caractérisé par le fait que** l'attache de bras radial (3, 3a) est conçu en tant que liaison par emboîtement du bras radial avec le porte-pièce ou de la portion extérieure de bras radial (1) avec la portion intérieure de bras radial (1a), dans lequel la liaison par emboîtement est réalisée à engagement positif, donc à peu près en ajustement serré.

3. Porte-pièce selon la revendication 1, **caractérisé par le fait que** l'attache de bras radial (3, 3a) est conçu en tant que liaison à encliquetage du bras radial avec le porte-pièce ou de la portion extérieure de bras radial (1) avec la portion intérieure de bras radial (1a).

4. Porte-pièce selon l'une quelconque des revendications précédentes, **caractérisé par le fait que** l'attache de bras radial (3, 3a) est conçue de telle sorte que le bras radial peut être monté par le dessous sur le porte-pièce ou la portion extérieure de bras radial (1) peut être monté par le dessous sur la portion intérieure de bras radial (1a).

5. Porte-pièce selon la revendication 4, **caractérisé par le fait que** les logements en queue d'aronde (3a) sont ouverts vers le haut et vers le bas.

6. Porte-pièce selon la revendication 6, **caractérisé par le fait que** le dispositif de verrouillage (4, 4a) comprend un dispositif de commande pour l'actionnement, en particulier un dispositif de commande qui est réalisé en tant que pommeau (4a) monté sur ledit verrou transversal (4).

7. Porte-pièce selon l'une quelconque des revendications précédentes, **caractérisé par le fait qu'**un levier de blocage (5) est monté, sur le dessous, sur le bras radial détachable ou bien sur la portion extérieure de bras radial (1), lequel levier de blocage sert, en tant que partie d'un dispositif de blocage, à bloquer le porte-pièce sur le support de scie.

8. Porte-pièce selon l'une quelconque des revendications précédentes, **caractérisé par le fait que** le bras radial ou bien la portion extérieure de bras radial (1) présente une projection qui fait saillie entre ses deux tenons mâles (3) vers le porte-pièce et qui, lorsque le bras radial ou bien la portion extérieure de bras radial (1) est monté(e) sur le porte-pièce ou bien sur la portion intérieure de bras radial (1a) s'engage sous le porte-pièce ou bien sous la portion intérieure de bras radial (1a).

9. Porte-pièce selon l'une quelconque des revendications précédentes, **caractérisé par le fait que** la fente pour lame de scie (6) est bordée d'un insert de table (9, 9a) échangeable qui est réalisé dans un matériau facilement usinable tel que la matière plastique et qui comprend au moins une pièce d'insert (9) côté plateau tournant et au moins une pièce d'insert (9a) côté bras radial.

10. Scie à onglet comprenant un support de scie et un porte-pièce reçu en rotation sur celui-ci, ainsi qu'un ensemble de scie qui est fixé sur ledit porte-pièce de manière à tourner simultanément et qui présente une lame de scie qui est apte à être abaissée à partir d'une position située au-dessus du porte-pièce, est déplaçable de manière transversale ou n'est pas déplaçable, **caractérisée par le fait que** le porte-pièce est conçu selon l'une quelconque des revendications précédentes
